# EUROPEAN PATENT SPECIFICATION

(11) **EP 0 844 419 B1**
(45) Date of publication and mention of the grant of the patent: **04.02.2004**
(21) Application number: 97120450.8
(22) Date of filing: 21.11.1997
(51) Int. Cl.: F16J 3/04

(54) **Bellows type cylindrical body**
Faltenbalgartiger, zylindrischer Körper
Corps cylindrique de type soufflet.

(30) Priority: 22.11.1996 JP 32779196
(43) Date of publication of application: 27.05.1998
(73) Proprietor: INOAC CORPORATION, Nagoya-shi Aichi-ken (JP); SHOWA CORPORATION, Gyoda-shi, Saitama (JP)
(72) Inventor: Shibata, Hiroshi, c/o Inoac Corporation, Anjo-shi, Aichi (JP)
(74) Representative: Füchsle, Klaus, Dipl.-Ing.

(56) References cited:
- GB-A- 2 031 530
- US-A- 3 313 319
- US-A- 5 308 091
- PATENT ABSTRACTS OF JAPAN vol. 007, no. 275 (M-261), 8 December 1983 & JP 58 152970 A (NIPPON MEKTRON KK), 10 September 1983

## Description

### BACKGROUND OF THE INVENTION

### 1. Field of the Invention

The present invention relates to a bellows type cylindrical body which partially includes a bellows portion.

Document JP-A-58-152970 discloses a bellows type cylindrical body having the features recited in the preamble of amended claim 1. As disclosed in this document, at least one end bellows portion of both end portions has a diameter smaller than those of the other bellows portions. Therefore, this document discloses two possibilities: (i) one end portion has a smaller diameter than the (middle) bellows portion and the other end portion, the diameters of the middle bellows portion and the other end portion being the same, and (ii) both end portions have a smaller diameter than the middle bellows portion, and both end portions have the same diameter. In summary, the bellows type cylindrical body according to this prior art document only has two different diameters (or spring rates) of two bellows regions.

### 2. Description of the Related Art

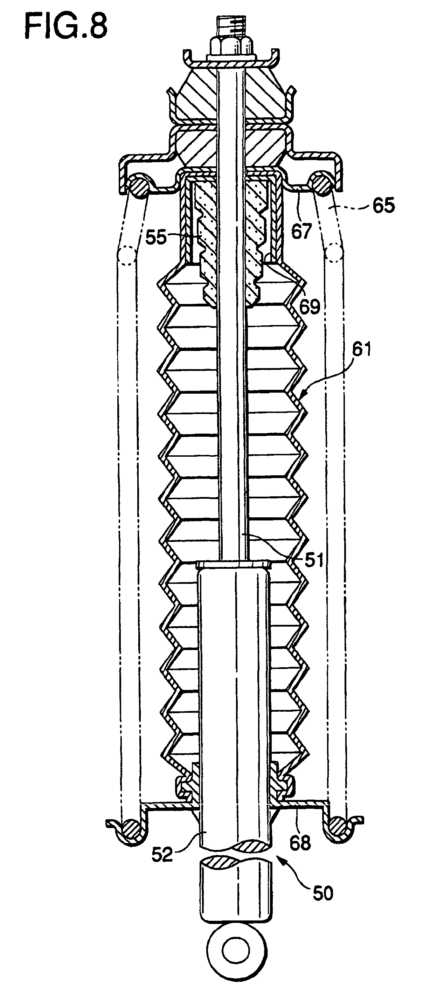

Conventionally, in the expansion and contraction portions of various mechanical devices, there is used a bellows type cylindrical body. For example, as a suspension for front or rear wheels in a vehicle, there is known a suspension which is structured such that, as shown in Fig. 8, a bump cushion (which is also referred to as a bump stopper or a cushion rubber) 55 is mounted on the upper portion of a piston rod 51 of a hydraulic bumper 50, and a bellows type cylindrical body 61 formed of elastic material such as rubber or the like for covering the piston rod 51 and bump cushion 55 is also mounted on the piston rod 51 upper portion, while a coil spring 65 is mounted on the outside of the bellows type cylindrical body 61. In Fig. 8, reference numeral 52 designates a cylinder, 67 an upper spring seat, 68 a lower spring seat, and 69 a metal-made cylindrical reinforcing member, respectively. Here, the above-mentioned bellows type cylindrical body 61 used in the suspension of a vehicle is generally referred to as a dust cover but, in the following description, it is called the bellows type cylindrical body.

In the conventional suspension, when vibrations and shocks are given from the road surface, the piston rod 51 and coil spring 65 of the bumper are expanded and compressed to thereby absorb the shocks and, when they are compressed to their limits, the upper end of the cylinder 52 is butted against the bump cushion 55 to compress and deform the bump cushion 55, thereby preventing the cylinder 52 from butting against the bottom of the wheel. Also, the bellows type cylindrical body 61 can be expanded and compressed together with the piston rod 51 and coil spring 65 to thereby prevent mud from attaching to the piston rod 51 and bump cushion 55 or prevent stones on the road surface from butting against them.

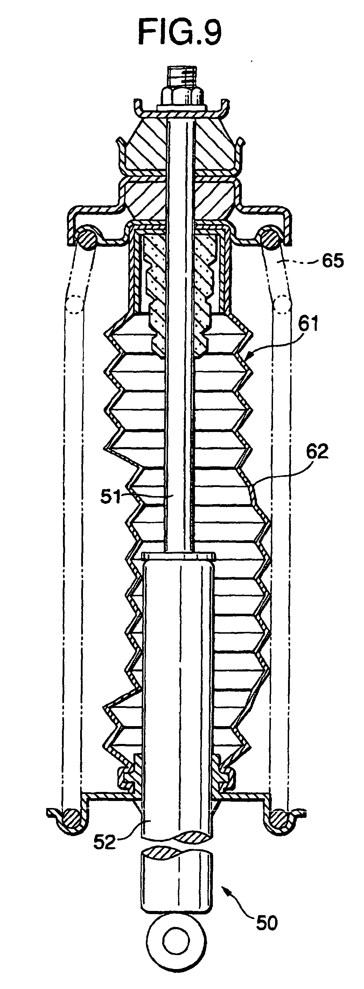

By the way, according to the kinds of vehicles, or according to whether a suspension is designed for a front wheel or for a rear wheel, the piston rod 51 and the like vary in length, while the bellows type cylindrical body 61 also varies in length according to the lengths of the piston rod 51 and the like. Therefore, as in the conventional suspension, when the bellows type cylindrical body 61 is rather long, as shown in Fig. 9, in the bellows type cylindrical body 61 which has a large length, the bellows portion 62 thereof can be flexed in the radial direction (which is hereinafter referred to as body bending) during the compression thereof to thereby touch the coil spring 65 and cylinder 52. And, there is a fear that the bellows portion 62 of the bellows type cylindrical body can be broken due to the contact of the bellows type cylindrical body 61 with the coil spring 65 and the like.

Here, in order to make it difficult for the body bending of the bellows type cylindrical body 61 to occur, it can be expected that the diameter of the bellows type cylindrical body 61 is increased. However, since the coil spring 65 is present on the outer periphery of the bellows type cylindrical body 61, there is a limit to such increase in the diameter of the bellows type cylindrical body 61, that is, the diameter of the bellows type cylindrical body 61 cannot be increased so sufficiently as to be able to prevent the body bending thereof when it is compressed. Also, because the diameter of the coil spring 65 is decided based on the function and space thereof, it is also impossible to change the diameter of the coil spring 65 for the purpose of increasing the diameter of the bellows type cylindrical body 61.

### SUMMARY OF THE INVENTION

The present invention aims at eliminating the drawbacks found in the above-mentioned conventional bellows type cylindrical body, and therefore an object of the invention is to provide a bellows type cylindrical body for use not only in a vehicle suspension but also in ordinary mechanical devices which can reduce its body bending when it is compressed.

To achieve the above object, according to the invention, there is provided a bellows type cylindrical body having the features which are recited in claim 1. Preferred embodiments of the invention are recited is the dependent claims.

In this specification, the spring rate means a stiffness of the compressible bellows portion, that is, a ratio of a linear displacement of the spring (the compressible bellows portion) to a variation in a force exerted on the spring.

In the invention, the compressible bellows portion is classified into a plurality of at least three regions along the longitudinal direction, and for example, since the thickness of the projecting portions in the compressible bellows portion is changed for each of the classified regions as will be described later, even if the same force is applied to the respective regions, the replacement of the compressible bellows portion which is caused by application of the force is different between the respective regions, thus obtaining the bellows type cylindrical body having the compressible bellows portion one region of which is relatively different in a spring rate from another region.

Furthermore, as a result of linking the respective regions of the compressible bellows portion which are relatively different in spring rate in series along the longitudinal direction in the order of larger or smaller spring rates, even if a given force is applied to one end of the compressible bellows portion, the respective regions are deformed differently from each other depending on the spring rate. Then, as the force increases, a region having the smallest spring rate is first completely compressed, and the regions having smaller spring rates are then sequentially compressed. Thus, since the respective regions of the compressible bellows portion are sequentially compressed according to the spring rate, the overall bellows type cylindrical body is compressed in parallel to a compressed direction without being bent. Also, the bellows type cylindrical body is expanded so as to be restored due to removal of the force as applied after compression in such a manner that the action of expansion is conducted in the same principle as the action of compression.

Accordingly, the compressible bellows portion can be repeatedly contracted and expanded in such a manner that a center line of the compressible bellows portion in its section is not largely decentered from a center line of the compressible main body (piston).

According to one aspect of the invention, in a bellows type cylindrical body, the thicknesses of the projecting portions of the bellows portion in the above respective regions are set different from each other so that the thicknesses of the projecting portions become gradually larger from one end side bellows region toward the other end side bellows region.

According to another aspect of the invention, in a bellows type cylindrical body, diameter differences between the projecting portions and valley portions of the bellows portion in the above respective areas are set different from each other so that they become gradually larger from one end side bellows region toward the other end side bellows region.

According to still another aspect of the invention, in combination with the features of the previous aspect of the invention, in a bellows type cylindrical body, the thicknesses of the projecting portions of the bellows portion in the above respective areas are set different from each other so that they become gradually larger from one end side bellows region toward the other end side bellows.

The above and other objects and features of the present invention will be more apparent from the following description taken in conjunction with the accompanying drawings.

### BRIEF DESCRIPTION OF THE DRAWINGS

Fig. 1 is a section view of a bellows type cylindrical body according to an embodiment of the invention, illustrating how it is used;
Figs. 2A, 2B and 2C are section views of the tube walls of the respective areas of the bellows portion of the bellows type cylindrical body;
Fig. 3 is a section view of the bellows type cylindrical body, showing the initial stage of compression of the bellows portion of the bellows type cylindrical body;
Fig. 4 is a section view of the bellows type cylindrical body, showing the middle stage of compression of the bellows portion of the bellows type cylindrical body;
Fig. 5 is a section view of the bellows type cylindrical body, showing the final stage of compression of the bellows portion of the bellows type cylindrical body;
Fig. 6 is a section view of a bellows type cylindrical body according to another embodiment of the invention, illustrating how it is used;
Fig. 7 is a section view a bellows type cylindrical body according to still another embodiment of the invention, showing how it is used;
Fig. 8 is a section view of a conventional bellows type cylindrical body, showing how it is used; and
Fig. 9 is a section view of the conventional bellows type cylindrical body, showing the body bending of the bellows portion thereof.

### DETAILED DESCRIPTION OF THE PREFERRED EMBODIMENTS

Now, description will be given below in detail of embodiments of a bellows type cylindrical body according to the invention with reference to the accompanying drawings.

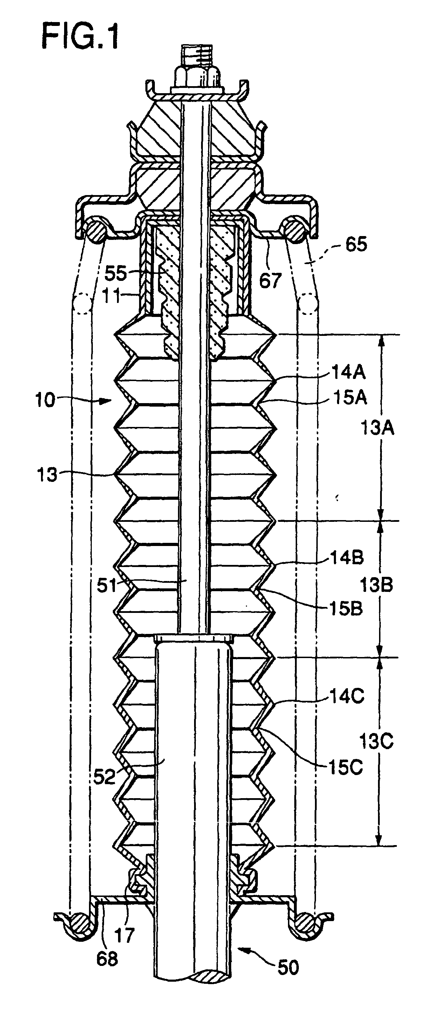

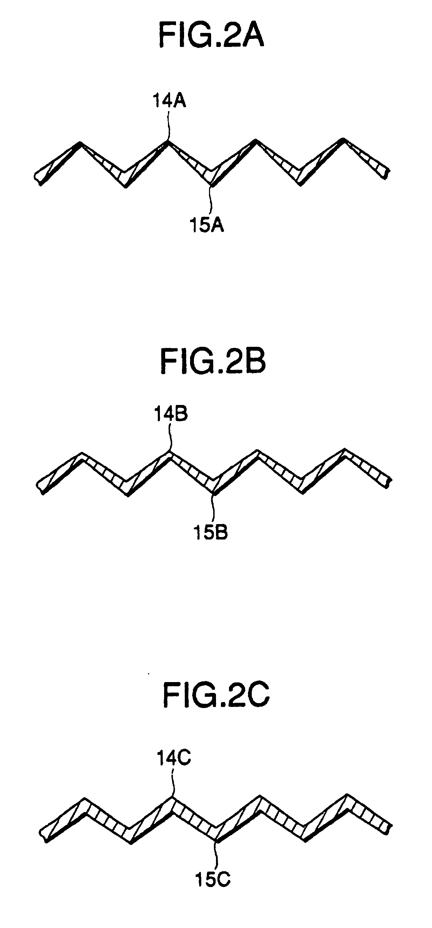

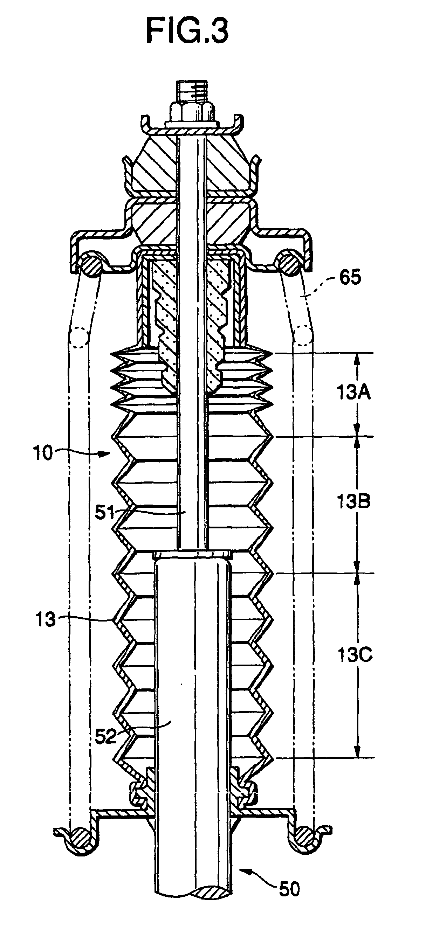

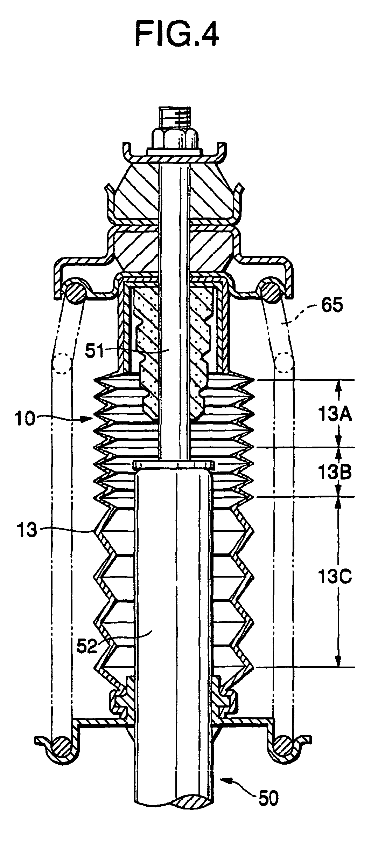

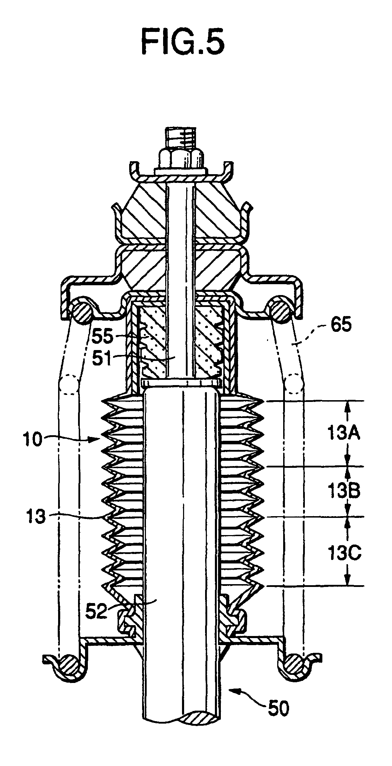

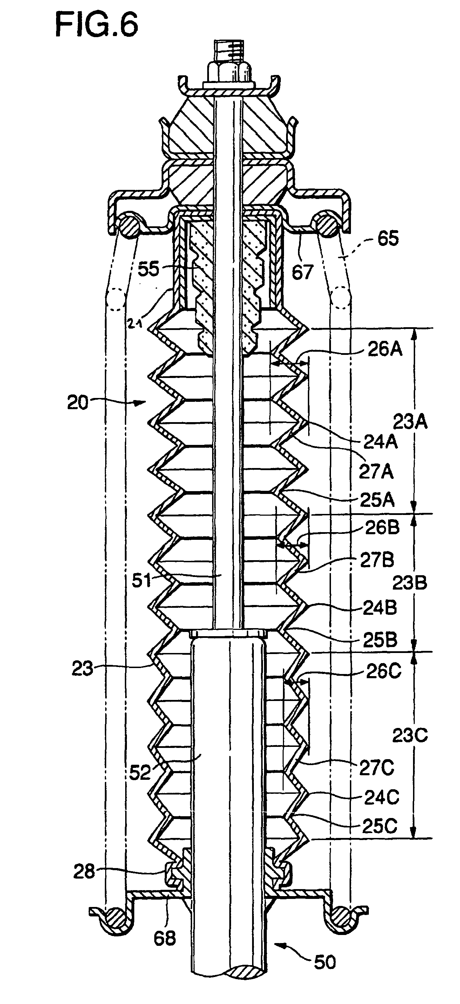

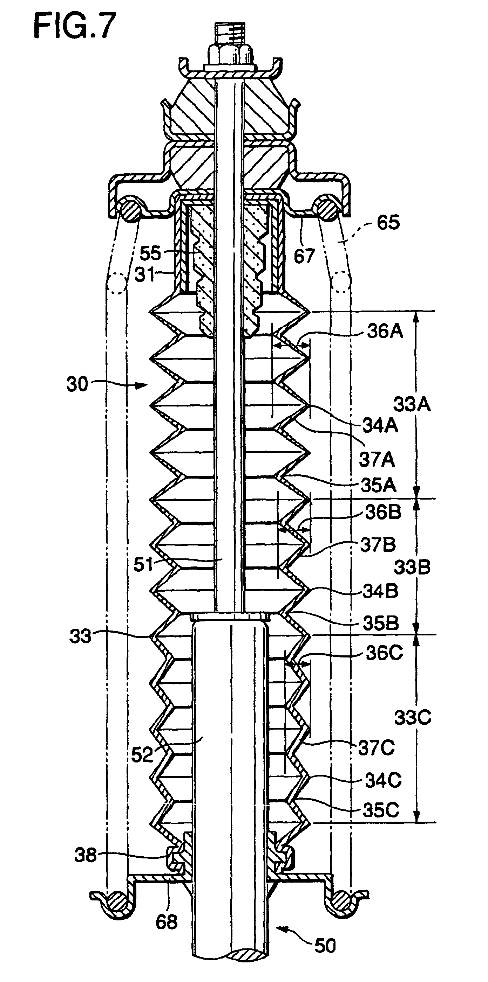

Fig. 1 is a section view a bellows type cylindrical body according to one embodiment of the invention, illustrating how it is used, Figs. 2A to 2C are section views of the tube walls of the respective areas of the bellows type cylindrical body, Fig. 3 is a section view of the bellows type cylindrical body, showing the initial stage of compression of the bellows portion of the bellows type cylindrical body, Fig. 4 is a section view of the bellows type cylindrical body, showing the middle stage of compression of the bellows portion of the bellows type cylindrical body, and Fig. 5 is a section view of the bellows type cylindrical body, showing the final stage of compression of the bellows portion of the bellows type cylindrical body. Also, Fig. 6 is a section view of a bellows type cylindrical body according to another embodiment of the invention, illustrating how it is used, and Fig. 7 is a section view of a bellows type cylindrical body of according to still another embodiment of the invention, showing how it is used.

At first, a description will be given below of the embodiment according to the invention with reference to Figs. 1 to 5. Here, the same parts as those that have been described in the prior art are given the same designations.

A cylindrical body of a bellows type 10 is to be mounted in such a manner that it covers a piston rod of a bumper 50 employed in a vehicle suspension and is formed of rubber, polyolefin-system thermoplastic elastomer (TPO), polyethylene, polyester elastomer, or the like. The bellows type cylindrical body 10 according to the embodiment is structured such that the upper portion thereof consists of a storage cylindrical portion 11 and the lower portion thereof consists of a bellows portion 13. Also, in the inner peripheral surface of the lower-most end of the bellows type cylindrical body, there is formed a groove 17 which is used for engagement with a lower spring seat 68.

The bellows portion 13 is used to allow the bellows type cylindrical body to be expanded and compressed to the expansion and compression of a piston rod 51 and coil spring 65, and is structured such that it has a given pitch and a given outside diameter. Also, the bellows portion 13 is divided into three areas, that is, an upper area 13A, an intermediate area 13B and a lower area 13C at a given interval along the longitudinal direction thereof (that is, a direction intersecting at right angles to the diameter thereof), while the projecting portions 14A, 14B and 14C of the respective areas are different in thickness from each other. On the other hand, the valley portions 15A, 15B and 15C of the respective areas are identical in thickness with each other and they are uniform in thickness over the whole of the bellows portion 13. The section view of the tube walls of the bellows portion 12 in the respective area is enlargedly shown in Figs. 2A to 2C. In particular, Fig. 2A shows the tube wall of the upper area 13A, Fig. 2B shows the tube wall of the intermediate area 13B, and Fig. 2C shows the tube wall of the lower area 13C, respectively.

The thicknesses of the projecting portions 14A, 14B and 14C of the respective areas are constant within their respective areas but are different from each other. In the embodiment, the thickness of the projecting portion 14A in the upper area 13A is set smallest, while the thicknesses of the projecting portions 14B and 14C of the middle and lower areas 14B and 14C become larger in this order. The thicknesses of the projecting portions 14A, 14B and 14C have an effect on the compression of the bellows portion 13 and, in particular, the smaller the thickness is, the easier the compression of the bellows portion 13 is. Therefore, in the embodiment, the upper area 13A, with the thickness of the projecting portion 14A set smallest, can be compressed most easily, the middle area 13B can be compressed second easily, and the lower area 13C is most difficult to be compressed.

In the above-mentioned bellows type cylindrical body 10, if the piston rod 51 and coil spring 65 are compressed due to the uneven portions of the road surface or the like, as shown in Fig. 3, the bellows portion of the bellows type cylindrical body 10 is compressed in the following manner: that is, the upper area 13A that is easiest to be compressed is compressed first, after then, the middle area 13B that is second easiest to be compressed is compressed in such a manner as shown in Fig. 4 and, finally, the lower area 13C that is most difficult to be compressed is compressed in such a manner as shown in Fig. 5. In this manner, because the compression of the bellows portion 13 begins at one area thereof and such compression is moved to the next area thereof sequentially, the length of the portion to be compressed provides the length of the area to be compressed and thus it is shorter than the length of the whole of the bellows portion 13. This is the same as in a case in which a bellows type cylindrical body including a short bellows portion is compressed sequentially and, therefore, as in the embodiment, even in the case of the bellows type cylindrical body 10 including the bellows portion 13 which is long as a whole, there can be reduced the body bending of the bellows portion 13 caused when it is compressed.

Also, in the bellows type cylindrical body 10, as described above, since the respective areas of the bellows portion 13 thereof are arranged sequentially in such a manner that the thicknesses of the projecting portions of the areas become larger from one end side (upper side) of the bellows portion 13 toward the other end side (lower side) thereof, the bellows portion 13 is compressed sequentially starting from one end side thereof. Here, generally, in a long bellows portion, the central portion thereof that is weak in rigidity is first compressed and is thereby flexed easily in the radial direction. That is, the area arrangement of the bellows portion 13 according to the embodiment can restrain such flexion, which in turn can reduce the above-mentioned body bending as well.

By the way, concerning the number of the above-mentioned areas, the lengths of the respective areas, the thicknesses and pitches of the concave and convex of bellows and arrangement that the thicknesses of the projecting portions become wide sequentially toward the upper end thereof or toward the lower end thereof, they depend on a whole dimension or material, etc., of a bellows type cylindrical body, and they are set case by case. For example, the bellows type cylindrical body can be formed of an TPO blow molding in which the whole length thereof is 330 mm, the length of the upper area 13A of the bellows portion 13 is 84 mm, the length of the middle area 13B is 74 mm, the length of the lower area 13C is 84 mm, the major diameter of the bellows portion 13 is 76 mm, the minor diameter of the bellows portion 13 is 56 mm, the pitch thereof is 10 mm, the thickness of the projecting portion 14A of the upper area 13A is 0.2 mm, the thickness of the projecting portion 14B of the upper area 13B is 0.4 mm, and the thickness of the projecting portion 14C of the upper area 13C is 0.6 mm.

To confirm the effects of the invention, a bellows type cylindrical body according to the invention and having the above-mentioned dimensions and a bellows type cylindrical body having a conventional structure in which the projecting portions and valley portions of a bellows portion thereof are constant over the whole length of the bellows portion were respectively mounted on the outer periphery of a piston rod of a bumper, and were compressed, and then the quantities of the maximum deformation of the respective bellows portions in the diametrical direction thereof were measured. According to such measurements, the maximum deformation quantity of the invention was 2.8 mm, whereas the maximum deformation quantity of the conventional bellows type cylindrical body was 4.3 mm. That is, it can be clearly confirmed from the above measurement that the invention is much harder to produce the body bending than the conventional cylindrical body.

Next, a description will be given below of an embodiment of a bellows type cylindrical body according to the invention with reference to Fig. 6. A bellows type cylindrical body 20 shown in Fig. 6 is formed of similar material to the bellows type cylindrical body 10 that has been previously described in the embodiment according to the invention, and is mounted in such a manner that it covers a piston rod 51 of a bumper 50. In Fig. 6, reference numeral 21 designates a storage cylindrical portion for storing a bump cushion 55, 23 stands for a cylindrical bellows portion, and 28 represents an engaging groove which can be engaged with a lower spring seat 68.

The bellows type cylindrical body 20 is similar in structure to the bellows type cylindrical body 10 previously described in the embodiment according to the invention, except for the bellows portion 23.

The bellows portion 23 is divided into three areas along the longitudinal direction thereof, that is, an upper area 23A, a middle area 23B and a lower area 23C sequentially in this order from top to bottom; and, diameter differences (in general, which means a difference between the radial of the projecting portion and the radial of the valley portion of each area), in particular, 26A, 26B and 26C between the projecting portions 24A, 24B, 24C and the valley portions 25A, 25B and 25C are different from each other. Also, in each area, the diameter difference is set constant. By the way, the pitch, tube wall thickness and outside diameter are set constant over the whole of the bellows portion 23.

In the embodiment, the diameter differences are set such that they become smaller sequentially from the upper area 23A toward the lower area 23C. That is, the radial differences are set such that 26A>26B>26C. This radial differences have an effect on the facility of the compression of the bellows portion 23. In other words, the fact that the radial differences are large means that the widths of tube walls 27A, 27B and 27C between the projecting portions 24A, 24B, 24C and the valley portions 25A, 25B and 25C are large. Therefore, the rigidity of the tube walls 27A, 27B and 27C between the projecting portions and valley portions is reduced to thereby be able to facilitate the compression of the bellows portion 23 and also, when the pitch is set uniform, the tube walls 27A, 27B and 27C between the projecting portions 24A, 24B, 24C and the valley portions 25A, 25B and 25C lie down in the horizontal direction, which can also facilitate the compression of the bellows portion 23. That is, in the embodiment, the upper area 23A having the largest diameter difference is easiest to be compressed, the middle area 23B is second easiest to be compressed, and the lower area 23C is most difficult to be compressed.

In the bellows type cylindrical body 20 including the above-structured bellows portion 23, when the piston rod 51 and coil spring 65 are compressed, then the.bellows portion 23 of the bellows type cylindrical body 20 is compressed in the following manner: that is, the most easily compressible upper area 23A is first compressed, after then, the second most easily compressible middle area 23B is next compressed, and the least compressible lower area 23C is compressed finally. That is, as has been previously described, the bellows portion 23 is compressed in the same way as a plurality of cylindrical bodies of a bellows type each including a short bellows portion are compressed sequentially and, therefore, even in the case of the bellows type cylindrical body 20 including the bellows portion 23 which is long as a whole, the body bending can be reduced. Also, in the bellows type cylindrical body 20, as described above, since the respective areas of the bellows portion thereof are arranged in such a manner that the diameter differences decrease sequentially from one end side (upper portion side) of the bellows portion 23 toward the other end side (lower portion side) thereof, the bellows portion 23 is compressed starting from the one end side thereof. For this reason, the central portion of the bellows portion 23 weak in rigidity is not compressed firstly, which in turn can reduce the body bending of the bellows portion of the bellows type cylindrical body 20.

By the way, whether the number of the above-mentioned areas, the lengths of the respective areas, the thicknesses of the projecting and valleys portions, the pitches, and the diameter differences increase sequentially toward the upper end of the bellows portion or toward the lower end thereof can be decided properly according to the whole dimensions, material and the like of the bellows type cylindrical body. However, since a cylinder 52 having a large diameter is inserted into the lower end side of the bellows type cylindrical body, if an area having a small diameter difference is arranged on the lower end side of the bellows portion, then the inside diameter of the lower portion of the bellows portion is large, which advantageously makes it difficult for the lower portion of the bellows portion to touch the cylinder 52. For example, a bellows type cylindrical body may be formed of a TPO blow molding in such a manner that the whole length thereof is 330 mm, the length of the upper area 23A of the bellows portion 23 is 84 mm, the length of the middle area 23B is 74 mm, the length of the lower area 23C is 84 mm, the major diameter of the bellows portion 23 is 70 mm, the pitch thereof is 15 mm, the thickness thereof is 0.5 mm, the minor diameter of the upper area 23 is 53 mm, the diameter difference 26A is 17 mm, the minor diameter of the middle area 23B is 56 mm, the diameter difference 26B is 14 mm, the minor diameter of the lower area 23C is 58 mm, and the diameter difference 26C is 12 mm.

To confirm the effects of the invention, a bellows type cylindrical body according to the invention was mounted on the outer periphery of a piston rod 51 of a bumper, and was compressed, and then the quantity of maximum deformation of the bellows portion thereof in the diametrical direction was measured. According to such measurement, the maximum deformation quantity of the embodiment was found 3.1 mm. That is, when compared with the conventional bellows type cylindrical body in which, as has been previously described, the maximum deformation quantity of the bellows portion thereof was found 4.3 mm, it can be clearly confirmed from the above measurement that the invention is much harder to produce the body bending than the conventional cylindrical body.

Now, description will be given below of an embodiment of a conventional bellows type cylindrical body according to the invention with reference to Fig. 7. A bellows type cylindrical body 30 shown in Fig. 7 is formed of similar material to the bellows type cylindrical body 10 that has been previously described in the embodiment according to the invention, and is mounted in such a manner that it covers a piston rod 51 of a bumper 50. In Fig. 7, reference numeral 31 designates a cylindrical storage portion for attaching a bump cushion 55, 33 stands for a cylindrical bellows portion, and 38 represents an engaging groove which can be engaged with a lower spring seat 68.

In the bellows type cylindrical body 30, the bellows portion 33 thereof combines the structure of the embodiment with the above structure and, except for the bellows portion 33, the bellows type cylindrical body 30 is similar in structure to the embodiment according to Fig. 1.

That is, the bellows portion 33 includes an upper area 33A, a middle area 33B and a lower area 33C arranged from the upper end thereof in this order, while the thicknesses of the projecting portions 34A, 34B and 34C of the bellows of the respective areas as well as diameter differences 36A, 36B and 36C between the projecting portions 34A, 34B, 34C and the valley portions 35A, 35B, 35C in the respective areas are different from each other. Also, the thicknesses of the projecting portions are set such that they become larger sequentially from the upper area 33A toward the lower area 33C and, on the other hand, the diameter differences are set such that they become smaller sequentially from the upper area 33A toward the lower area 33C. The pitch and outside diameter of the bellows portion 23 are set constant over the whole area thereof. In Fig. 7, reference character 37A designates a tube wall between the projecting portion 34A and valley portion 35A in the upper area 33A, 37B a tube wall between the projecting portion 34B and valley portion 35B in the upper area 33B, and 37C a tube wall between the projecting portion 34C and valley portion 35C in the upper area 33C, respectively.

In the bellows type cylindrical body 30, as described above, because the thicknesses of the projecting portions are set such that they become larger sequentially from the upper area 33A toward the lower area 33C and, on the other hand, the diameter differences are set such that they become smaller sequentially from the upper area 33A toward the lower area 33C, there can be obtained a multiplier effect not only due to the variations in the thicknesses of the projecting portions described above but also due to the variations in the diameter differences described above, which makes it possible to prevent the body bending of the bellows portion in the compression thereof more effectively.

To confirm the effect of the invention, a bellows type cylindrical body was formed of a TPO blow molding in such a manner that the whole length thereof is 330 mm, the length of the upper area 33A of the bellows portion 33 is 84 mm, the length of the middle area 33B thereof is 74 mm, the length of the lower area 33C thereof is 84 mm, the major diameter of the bellows portion 33 is 70 mm, the pitch thereof is 15 mm, the minor diameter of the upper area 33A is 53 mm, the thickness of the projecting portion 34A is 0.2 mm, the diameter difference 36A is 17 mm, the minor diameter of the middle area 33B is 56 mm, the thickness of the projecting portion 34B is 0.4 mm, the diameter difference 36B is 14 mm, the minor diameter of the lower area 33C is 58 mm, the thickness of the projecting portion 34C is 0.6 mm, the diameter difference 36C is 12 mm, and the thickness of the valley portions of the whole of the bellows portion 33 is 0.6 mm. The thus structured bellows type cylindrical body was then mounted on the outer periphery of the piston rod 51 of a bumper, and was compressed. After then, the maximum quantity of deformation of the bellows portion 33 in the diametrical direction was measured and was found 1.9 mm. That is, according to the invention, the body bending in the compression of the bellows portion was found smallest when compared with the embodiments according to the above embodiments of the invention.

Although the above-mentioned respective embodiments are the cylindrical bodies of a bellows type that are used as a dust cover for the vehicle suspension, the invention can also apply to a bellows type cylindrical body for use in other mechanical devices. And, of course, according to the mechanical devices, the bellows type cylindrical body may be changed in design properly, for example, it may be structured such that a bellows portion is provided over the whole area thereof, or a mounting portion for mounting it to the mechanical device is provided, or the like.

As has been illustrated and described heretofore, in the bellows type cylindrical body according to the invention, the bellows portion is divided into a plurality of at least three areas along the longitudinal direction of the bellows type cylindrical body, the thicknesses of the projecting portions of the bellows portion in the respective areas are different from each other, and the thicknesses of the above projecting portions are set such that they become larger or smaller sequentially from one end side area of the bellows portion toward the other end side area thereof, so that the bellows portion is sequentially compressed starting from the area in which the thickness of the projecting portion thereof is smallest. For this reason, even if a bellows type cylindrical body includes a long bellows portion, since the long bellows portion is divided into short areas so that the divided areas of the bellows portion are respectively compressed sequentially starting from one end side of the bellows portion, there can be reduced the body bending of the bellows portion which has been conventionally produced because the bellows portion is long.

Also, in the bellows type cylindrical body according to the invention, the bellows portion thereof is divided into a plurality of at least three areas along the longitudinal direction of the bellows type cylindrical body, the diameter differences between the projecting portions and valley portions of the bellows in the respective areas are set different from each other, and the diameter differences are set such that they become larger or smaller sequentially from the one end side area of the bellows portion toward the other side area thereof, so that the bellows portion can be compressed sequentially from the area having the largest diameter difference. Therefore, even if a bellows type cylindrical body includes a long bellows portion, the long bellows portion is divided into short areas and thus the bellows portion is compressed sequentially from the one end side area thereof, which can reduce the body bending in the compression of the bellows portion that has been produced because the bellows portion is long.

Further, in the bellows type cylindrical body according to the invention, the bellows portion thereof is divided into a plurality of at least three areas along the longitudinal direction of the bellows type cylindrical body, the diameter differences between the projecting portions and valley portions of the bellows of the respective areas are set different from each other, and the thicknesses of the projecting portions are set such that they become larger or smaller sequentially from the one end side area of the bellows portion toward the other side area thereof, and, on the other hand, the diameter differences are set such that they become smaller or larger sequentially from the one end side area of the bellows portion toward the other side area thereof. Thanks to this structure, due to a multiplier effect obtained by the inventions, the body bending in the compression of the bellows portion can be controlled to a minimum.

The foregoing description of the preferred embodiments of the invention has been presented for purposes of illustration and description. The embodiments were chosen and described in order to explain the principles of the invention and its practical application to enable one skilled in the art to utilize the invention in various embodiments and with various modifications as are suited to the particular use contemplated, lying within the scope of the invention as defined by the claims appended hereto.

## Claims

1. A bellows type cylindrical body (10;20;30) comprising:
a compressible bellows portion (13;23;33) classified into a plurality of at least three bellows regions (13A-13C;23A-23C;33A-33C) in its longitudinal direction;
the spring rates of at least two bellows regions of said compressible bellows portion (13;23;33) being relatively different;
**characterized in that**:
the spring rates of said at least three bellows regions (13A-13C;23A-23C;33A-33C) are relatively different; and
the spring rates of said at least three bellows regions (13A-13C;23A-23C;33A-33C) are different along the longitudinal direction of said compressible bellows portion (13;23;33) **in that** the spring rates become gradually larger from one end side bellows region of the bellows portion (13;23;33) toward the other end side bellows region.

2. A bellows type cylindrical body (10;20;30) according to claim 1 **characterized in that**
the thicknesses of the projecting portions (14A, 14B, 14C;34A-34C) of the bellows regions (13A, 13B, 13C;33A-33C) are different from each other so that the thicknesses of the projecting portions (14A-14C;34A-34C) gradually change in said longitudinal direction from the one end of the bellows portion (13;33) toward the other end thereof;
and/or diameter differences (26A-26C; 36A-36C) between the projecting portions (24A-24C;34A-34C) and valley portions (25A-25C;35A-35C) of the bellows regions (23A-23C;33A-33C) are different so that the diameter differences (26A-26C; 36A-36C) gradually change in said longitudinal direction from the one end of the bellows portion (23;33) toward the other end thereof.

3. A bellows type cylindrical body (30) according to claim 2, **characterized in that**
the thicknesses of the projecting portions (34A, 34B, 34C) gradually increase in said longitudinal direction from the one end of the bellows portion (33) toward the other end thereof;
and the diameter differences (36A-36C) between the projecting portions (34A, 34B, 34C) and the valley portions (35A, 35B, 35C) gradually decrease from the one end of the bellows portion (33) toward the other end thereof.

## Patentansprüche

1. Zylindrischer Körper (10;20;30) des Faltenbalgtyps, welcher aufweist:
einen zusammendrückbaren Faltenbalgabschnitt (13;23;33), der in mehrere, zumindest drei, Faltenbalgbereiche (13A-13C;23A-23C;33A-33C) in seiner Längsrichtung unterteilt ist;
wobei die Federraten von zumindest zwei Faltenbalgbereichen des zusammendrückbaren Faltenbalgbereichs (13;23;33) in Bezug aufeinander verschieden sind;
**dadurch gekennzeichnet, dass**:
die Federraten der zumindest drei Faltenbalgbereiche (13A-13C;23A-23C;33A-33C) in Bezug aufeinander verschieden sind; und
die Federraten der zumindest drei Faltenbalgbereiche (13A-13C;23A-23C,33A-33C) entlang der Längsrichtung des zusammendrückbaren Faltenbalgbereichs (13;23;33) in der Hinsicht verschieden sind, dass die Federraten von einer Endseite des Faltenbalgbereichs des Faltenbalgabschnitts (13;23;33) zu dem Faltenbalgbereich an der anderen Endseite allmählich größer werden.

2. Zylindrischer Körper (10;20;30) des Faltenbalgtyps nach Anspruch 1, **dadurch gekennzeichnet, dass**
die Dicken der vorspringenden Abschnitte (14A,14B,14C; 34A-34C) der Faltenbalgbereiche (13A,13B,13C; 33A-33C) voneinander verschieden sind, so dass sich die Dicken der vorspringenden Abschnitte (14A-14C;34A-34C) allmählich in der Längsrichtung von dem einen Ende des Faltenbalgabschnitts (13;33) zu dessen anderen Ende hin ändern;
und/oder Durchmesserunterschiede (26A-26C;36A-36C) zwischen den vorspringenden Abschnitten (24A-24C;34A-34C) und Talabschnitten (25A-25C;35A-35C) der Faltenbalgbereiche (23A-23C;33A-33C) verschieden sind, so dass die Durchmesserunterschiede (26A-26C; 36A-36C) sich allmählich in der Längsrichtung von dem einen Ende des Faltenbalgabschnitts (23;33) zu dessen anderen Ende hin ändern.

3. Zylindrischer Körper (30) des Faltenbalgtyps nach Anspruch 2, **dadurch gekennzeichnet, dass**
die Dicken der vorspringenden Abschnitte (34A,34B,34C) allmählich in der Längsrichtung von dem einen Ende des Faltenbalgabschnitts (33) zu dessen anderen Ende hin zunehmen;
und die Durchmesserunterschiede (36A-36C) zwischen den vorspringenden Abschnitten (34A,34B,34C) und den Talabschnitten (35A,35B,35C) allmählich von dem einen Ende des Faltenbalgabschnitts (33) zu dessen anderen Ende hin abnehmen.

## Revendications

1. Corps cylindrique (10; 20; 30) du type en soufflet, qui comprend :
une partie de soufflet compressible (13; 23; 33) partagée en une pluralité d'au moins trois zones de soufflet (13A-13C; 23A-23C; 33A-33C) dans le sens de sa longueur,
les constantes de ressort d'au moins deux zones de soufflet de ladite partie de soufflet compressible (13; 23; 33) étant différentes l'une de l'autre,
**caractérisé en ce que**
les constantes de ressort desdites au moins trois zones de soufflet (13A-13C; 23A-23C; 33A-33C) sont différentes les unes des autres,
les constantes de ressort desdites au moins trois zones de soufflet (13A-13C; 23A-23C; 33A-33C) sont différentes dans le sens de la longueur de ladite partie de soufflet compressible (13; 23; 33) par le fait que les constantes de ressort augmentent progressivement depuis une zone d'extrémité de la partie de soufflet (13; 23; 33) jusqu'à l'autre zone d'extrémité.

2. Corps cylindrique (10; 20; 30) du type en soufflet selon la revendication 1, **caractérisé en ce que**
les épaisseurs des parties en saillie (14A, 14B, 14C; 34A-34C) des zones de soufflet (13A-13C; 33A-33C) diffèrent les unes des autres de telle sorte que les épaisseurs des parties en saillie (14A-14C; 34A-34C) changent progressivement dans ledit sens de la longueur, depuis une extrémité de la partie de soufflet (13; 33) jusqu'à son autre extrémité,
et/ou des différences de diamètre (26A-26C; 36A-36C) entre les parties en saillie (24A-24C; 34A-34C) et les parties en creux (25A-25C; 35A-35C) des zones de soufflet (23A-23C; 33A-33C) sont différentes, de telle sorte que les différences de diamètre (26A-26C; 36A-36C) changent progressivement dans ledit sens de la longueur, depuis une extrémité de la partie de soufflet (23; 33) jusqu'à son autre extrémité.

3. Corps cylindrique (30) du type en soufflet selon la revendication 2, **caractérisé en ce que**
les épaisseurs des parties en saillie (34A, 34B, 34C) augmentent progressivement dans ledit sens de la longueur, depuis une extrémité de la partie de soufflet (33) jusqu'à son autre extrémité et
les différences de diamètre (36A-36C) entre les parties en saillie (34A, 34B, 34C) et les parties en creux (35A, 35B, 35C) diminuent progressivement depuis une extrémité de la partie de soufflet (33) jusqu'à son autre extrémité.
